Europäisches Patentamt

European Patent Office

Office européen des brevets

(19)

(11) Veröffentlichungsnummer: **0 238 447**
**A2**

## (12) EUROPÄISCHE PATENTANMELDUNG

(21) Anmeldenummer: 87810153.4

(22) Anmeldetag: 16.03.87

(51) Int. Cl.⁴: **B 29 C 71/04**
B 29 B 13/08
//(B29K71/00,83:00)

(30) Priorität: 21.03.86 DE 3609616

(43) Veröffentlichungstag der Anmeldung:
23.09.87 Patentblatt 87/39

(84) Benannte Vertragsstaaten:
CH DE FR GB IT LI NL SE

(71) Anmelder: **CIBA-GEIGY AG**
**Klybeckstrasse 141**
**CH-4002 Basel (CH)**

(72) Erfinder: **Tetzlaff, Ernst, Prof. Dr.-Ing.**
**Virchowstrasse 2**
**D-7920 Heidenheim (DE)**

(54) **Verfahren zur Herstellung eines spannungsriss- und temperaturbeständigen Kunststoffs.**

(57) Verfahren zum Herstellen eines temperatur- und spannungsrissbeständigen Kunststoffs, bei welchem aromatische Ringstrukturen enthaltende Thermoplaste, vor allem Polysulfone, Polyethersulfone, Polyetheretherketone und Polyetherimide, mit ionisierender Strahlung bestrahlt und die bestrahlten Thermoplaste einer Temperaturbehandlung unterworfen werden. Die erzeugten Kunststoffe sind wärmebeständiger als die Ausgangsthermoplaste und im Kontakt mit Flüssigkeiten nicht anfällig gegen Spannungsrisskorrosion.

EP 0 238 447 A2

**Beschreibung**

Verfahren zur Herstellung eines spannungsriß- und temperaturbeständigen Kunststoffs

Die Erfindung betrifft ein Verfahren zur Herstellung eines temperatur- und spannungsrißbeständigen Kunststoffs.

Duroplastische Kunststoffe, die allgemein eine vergleichsweise große Beständigkeit bei höheren Temperaturen aufweisen, sind weniger leicht formbar, als thermoplastische Kunststoffe, die Herstellung von Formlingen ist vergleichsweise aufwendig und zudem müssen die Formlinge zur Aushärtung des Harzes einer besonderen Wärmebehandlung unterzogen werden. Sogenannte Standard-Thermoplaste, z.B. Polyvinylchlorid oder Polyethylen, sind einfach zu verarbeiten, Formlinge aus diesen Materialien sind jedoch bei höheren Temperaturen nicht beständig. Es sind schließlich Thermoplastsorten bekanntgeworden, die vergleichsweise hohe Glasübergangstemperaturen bzw. Kristallit-Schmelztemperaturen haben und bis zu Temperaturen von etwa 200 °C beständig sind. Beispiele derartiger Thermoplaste sind lineare Polyarylverbindungen.

Besonders die amorphen Kunststoffe aus der Gruppe der temperaturbeständigeren Thermoplaste sind im Kontakt mit Flüssigkeiten, Lösungen und anderen Fluiden extrem spannungsrißempfindlich und können entsprechend nur sehr begrenzt verwendet werden. Es ist daher eine erste Aufgabe der Erfindung, die Spannungsrißempfindlichkeit dieser Kunststoffe wesentlich zu vermindern. Nach einer zweiten der Erfindung zugrundeliegenden Aufgabe soll die Temperaturbeständigkeit thermoplastischer Kunststoffe erhöht werden.

Die Aufgabe wird erfindungsgemäß dadurch gelöst, daß aromatische Ringstrukturen enthaltende strahlungsbeständige Thermoplaste

      a) mit ionisierender Strahlung bestrahlt,

      b) zur teilweisen Vernetzung auf eine erste Temperatur und

      c) zur vollständigen Vernetzung auf eine zweite Temperatur, gleich oder oberhalb der ersten Temperatur erhitzt werden.

Für das erfindungsgemäße Verfahren geeignet sind aromatische Ringstrukturen enthaltende Thermoplaste, wie Polycarbonat, Polyterephthalate und Polyarylate, besonders Thermoplaste mit Polyarylgruppen in linearer Anordnung, wie Polyaryloxide, -sulfide, -sulfone und -ether, soweit die Thermoplaste strahlungsbeständig sind und auch Mischungen dieser Stoffe. Besonders bevorzugt sind Polysulfone und Polyetherimide. Beim Bestrahlen von Polymeren mit ionisierender Strahlung laufen gleichzeitig mehrere Reaktionen ab, im wesentlich Vernetzungs-, Abbau- und bei Bestrahlung in Luft auch Oxidationsreaktionen. Der Anteil der einzelnen Reaktionen wird neben der Art des bestrahlten Polymeren durch die Bestrahlungsbedingungen bestimmt, wie Dosis, Dosisleistung in Verbindung mit der Diffusion von Luftsauerstoff in das bestrahlte Material und die Bestrahlungstemperatur. Diese müssen für jeden Thermoplast durch Versuche festgelegt werden. Einige Polymere mit aromatischen Ringstrukturen haben einen großen Stabilitätsbereich, wie z.B. Polyethersulfon, andere, wie Polycarbonat, sind nur in einem schmalen Bereich beständig. Ähnlich unempfindlich gegen die Bestrahlungsbedingungen wie Polyethersulfon sind Thermoplaste aus der Gruppe Polysulfon, Polyetheretherketon und Polyetherimid, die deshalb bevorzugt verwendet werden. Die Dauergebrauchstemperatur dieser Kunststoffe beträgt ca. 200 °C.

Es ist bekannt, daß die Gebrauchseigenschaften der strahlungsbeständigen Thermoplaste, wie Polysulfon, Polyethersulfon, Polyetheretherketon oder Polyetherimid sich durch Bestrahlung mit ionisierenden Strahlen wenig ändern. Auch nach einer Bestrahlungsdosis von mehr als 1 MJ/kg können sie wie unbestrahlte Thermoplaste verarbeitet und in bestimmten Lösemitteln gelöst werden. Zugfestigkeit, Sprödigkeit, Temperaturbeständigkeit (bzw. Wärmeformbeständigkeit) und das Verhalten gegen spannungsrißauslösende Fluide werden durch die Bestrahlung wenig bzw. erst bei höheren Strahlendosen beeinflußt, wobei insbesondere die mechanischen Eigenschaften verschlechtert werden. Ursache sind die bei der Bestrahlung gebildeten gasförmigen Produkte, der Aufbau innerer Spannungen und andere strukturelle Defekte. Bei den als strahlungsbeständig geltenden aromatischen Thermoplasten lassen sich somit durch die Bestrahlung keine besseren Gebrauchseigenschaften erreichen. Es wurde gefunden, daß durch eine besondere thermische Behandlung des bestrahlten Guts die Verschlechterung der mechanischen Eigenschaften aufgehoben und die Beständigkeit der Kunststoffe gegen Spannungsrißkorrosion und gegen höhere Temperaturen verbessert wird.

In dem ersten Verfahrensschritt werden die Thermoplaste in Form von Halbzeug - wie Rohren, Stäben, Platten, oder Folien, von Fertigteilen oder von Granulat einer ionisierenden Strahlung ausgesetzt. Geeignet sind beispielsweise UV-, Gamma- und Neutronenstrahlen und wegen der einfachen Handhabung und günstigen Wirkung insbesondere Beta-Strahlen. Gammastrahlen sind wegen ihrer großen Härte besonders zweckmäßig für die Bestrahlung von dickwandigen Fertigteilen. Die Bestrahlungsdosis ist wie oben erläutert gegebenenfalls auf die Art des Thermoplasten einzustellen, bevorzugt beträgt sie 0,5 bis 2 MJ/kg. Die Strahlungsdosis ist dabei insbesondere derart zu bemessen, daß bei der Bestrahlung die Glasübergangstemperatur des bestrahlten Thermoplasten nicht überschritten wird. Zur Regelung der Temperatur wird man entsprechend die Strahlendosis in mehreren Stufen aufbringen und das bestrahlte Gut zwischen diesen Stufen kühlen.

Durch die Bestrahlung werden die mechanischen Eigenschaften der Thermoplaste wie oben beschrieben geändert, ohne daß die Beaufschlagung mit ionisierender Strahlung die Temperatur- und Spannungsrißkorrosionsbeständigkeit der Thermoplaste verbessert. Nach den der Erfindung zugrundeliegenden Erkenntnissen ist es zur Erfüllung dieser Aufgabe nötig, die durch die Bestrahlung induzierten "latenten" Strukturänderungen durch eine wenigstens zweistufige Temperaturbehandlung zu aktivieren. In einer ersten Stufe, deren Temperatur vorzugsweise größer als die Glasübergangstemperatur ist, wird der Thermoplast nachvernetzt. Zweckmäßig ist die Temperatur der ersten Stufe 30 bis 80 K größer als die Glasübergangstemperatur bei einer Erhitzungsdauer von etwa 3 bis 24 h. Ist der Thermoplast teilkristallin, muß naturgemäß eine Temperatur unterhalb der Kristallitschmelztemperatur gewählt werden.

Nach einer ersten Stufe der Temperaturbehandlung sind die Thermoplasten geringfügig temperaturbeständiger und weniger empfindlich gegen Spannungsrißkorrosion als unbehandelte Materialien. Eine wesentliche Verbesserung und Stabilisierung der Materialeigenschaften wird erfindungsgemäß durch die Erhitzung des Thermoplasten auf wenigstens seine Verwendungstemperatur erzielt, oder falls die Verwendungstemperatur kleiner als die Temperatur der ersten thermischen Behandlungsstufe ist, auf wenigstens diese Temperatur. Die Erhitzungsdauer sollte zweckmäßig 1 bis 12 h betragen. Es ist nicht nötig, zwischen der ersten und zweiten Behandlungsstufe die Temperatur des Thermoplasten auf Raumtemperatur zu senken. Bei einer vergleichsweise hohen Temperatur der ersten Stufe und einer langen Haltezeit ist für die zweite Stufe keine oder eine sehr geringe Temperatursteigerung ausreichend. Wesentlich ist, die bestrahlten Thermoplaste in der ersten Stufe durch partielle Vernetzung derartig in ihren mechanischen Eigenschaften thermisch zu stabilisieren, dass Formlinge aus diesen Thermoplasten beim Erhitzen auf die Temperatur der zweiten Stufe nicht deformiert werden. Ist die Temperatur in der Stufe b) und c) gleich, so kann von einer einstufigen thermischen Behandlung gesprochen werden. Erfolgt die thermische Behandlung zweistufig, also bei verschiedenen Temperaturen, so ist die zweite Temperatur in der Regel 10°C, bevorzugt 50°C oberhalb der ersten Temperatur.

Das Verfahren kann auf Thermoplaste in beliebiger Form angewendet werden. Granulat wird als Schüttung bestrahlt und dabei zweckmäßig umgewälzt, z.B. in einem Fließbett oder durch ein besonderes Rührwerk. Mit vergleichsweise kleinem Aufwand erzielt man dabei eine konstante Dosis über jedes Volumenteil der Schüttung. Die Zunahme des Gelgehalts mit der Bestrahlung behindert die Verarbeitung der Granulate zu Halbzeug oder Fertigteilen kaum.

Nach einer anderen Ausführungsform werden die Thermoplaste zunächst mit Hilfe der in der Kunststofftechnik üblichen Formgebungsverfahren, z.B. Extrudieren oder Spritzgießen, zu Formlingen verarbeitet und diese mit der ionisierenden Strahlung bestrahlt. Durch Relativbewegungen von Strahlenquelle und Formling ist dabei Sorge zu tragen, daß jedes Volumenelement etwa mit der gleichen Dosis beaufschlagt wird. Gegebenenfalls muß auch die Strahlungsenergie an die Wandstärke des Formlings angepaßt werden.

Das erfindungsgemäße Verfahren ist insbesondere auch zur Herstellung temperatur- und spannungsrißbeständiger Thermoplaste mit Faserverstärkung geeignet. Geeignete Fasern sind Glasfasern, Keramikfasern und vor allem Kohlenstoffasern in Form von Kurzschnittfasern oder Endlosgarnen. Analog zu den unverstärkten Thermoplasten bestrahlt man die Kurzschnittfasern enthaltenden Pulver, Granulate, Halbzeug in Form von Prepreg oder flächigen Schichtkörpern oder Fertigteile wie Rohre, die Mono- oder Multifilamentgarne in räumlicher Anordnung enthalten. Die bestrahlten Elemente verwendet man beispielsweise zur Herstellung von Wabenstrukturen und ähnlich tragenden Teilen, das Granulat verarbeitet man z.B. durch Spritzgießen oder Extrudieren zu Formteilen. Bei der Herstellung größerer Körper oder von Körpern mit komplizierten Formen, Hinterschneidungen und dgl. ist es von Vorteil, mehrere einfachere oder kleinere Teile zu bestrahlen und die bestrahlten Körper miteinander zu einem Verbundkörper zu verkleben. Zu diesem Zweck löst man bestrahltes Granulat in einem Lösemittel, trägt die Lösung auf die zu verbindenden Flächen der Teilkörper auf, preßt die Flächen zusammen, läßt das Lösemittel verdampfen und erhitzt zur teilweisen Vernetzung des Thermoplasten auf eine erste Temperatur oberhalb seiner Glasübergangstemperatur und dann auf eine zweite höhere Temperatur. Der Verbundkörper ist homogen und über sein gesamtes Volumen temperatur- und spannungsrißbeständig. In bekannter Weise ist es möglich, die Verbindung auch durch Ultraschallschweißen herzustellen.

Nach einer anderen Ausführungsform der Erfindung wird der Thermoplast als Pulver oder vorzugsweise in Granulatform bestrahlt, das bestrahlte Pulver oder Granulat gelöst und die Lösung als Imprägniermittel zur Imprägnierung poröser Körper verwendet, beispielsweise zur Imprägnierung faserporöser Gelege, Filze und dgl. aus Kohlenstoffasern oder zum Imprägnieren poröser Kohlenstoff- und Graphitkörper. Der zu imprägnierende Körper wird in bekannter Weise entlüftet, das Imprägniermittel eingebracht, das Lösungsmittel verdampft und die imprägnierten Körper in einer ersten Verfahrensstufe zur teilweisen Vernetzung des Thermoplasten auf eine erste und in einer zweiten Verfahrensstufe auf eine zweite höhere Temperatur erhitzt. Die imprägnierten Körper sind vergleichsweise temperaturbeständiger als Kohlenstoffkörper, die mit Phenolformaldehydharz oder Furanharz imprägniert sind und als kohlenstoffaserverstärkte Körper mit einer Epoxid- oder Polyesterharz-Matrix. Das Imprägniermittel eignet sich auch zum Beschichten mannigfaltiger Materialien, beispielsweise von Metallrohren, deren Korrosionsfestigkeit durch die Beschichtung verbessert werden soll. Das Imprägniermittel kann ebenfalls als Kleber verwendet werden, der auf zu verklebende Flächen aufgetragen und nach Verdampfen des Lösemittels der Temperaturbehandlung unterworfen wird.

Erfindungsgemäß hergestellte Kunststoffe zeichnen sich aus durch ihre Formbeständigkeit bei hohen Temperaturen und die geringe Empfindlichkeit gegen Spannungsrißkorrosion. Sie eignen sich für eine Vielzahl von Anwendungen, die für die bekannten thermoplastischen Kunststoffe nicht zugänglich sind, insbesondere bei höheren Temperaturen und im Kontakt mit spannungsrißauslösenden Fluiden.

Es ist ferner bekannt, dass sich Thermoplaste eignen, um Duromere zu modifizieren. So sind z.B. in der US 3,530,087 Epoxidharzmassen beschrieben worden, welche durch den Zusatz von Polysulfonharzen modifiziert werden. Es hat sich im Rahmen der vorliegenden Erfindung gezeigt, dass die erfindungsgemäss hergestellten Thermoplaste eine deutlich verbesserte Verträglichkeit mit zu modifizierenden Duromeren zeigen. Diese zeigt sich in ausgezeichneten Werten der Biegefestigkeit und der Biegedehnung.

Die vorliegende Erfindung betrifft daher auch Duromere, welche mit Hilfe der nach dem erfindungsgemässen Verfahren hergestellten Thermoplaste modifiziert sind. Bei den Duromeren handelt es sich vorzugsweise um Epoxidharze, wie sie etwa in der bereits genannten US 3,530,087 beschrieben sind. Aufgrund der überraschend guten Verträglichkeit können Mischungen aus bis zu 100 Teilen Thermoplast bezogen auf 100 Teile Duromer eingesetzt werden.

Die Erfindung wird im folgenden anhand von Beispielen und fünf Zeichnungen erläutert, die den Schubmodul der in den Beispielen beschriebenen Thermoplaste darstellen. Der Schubmodul wurde im Torsionsschwingversuch nach DIN 53 445 bestimmt.

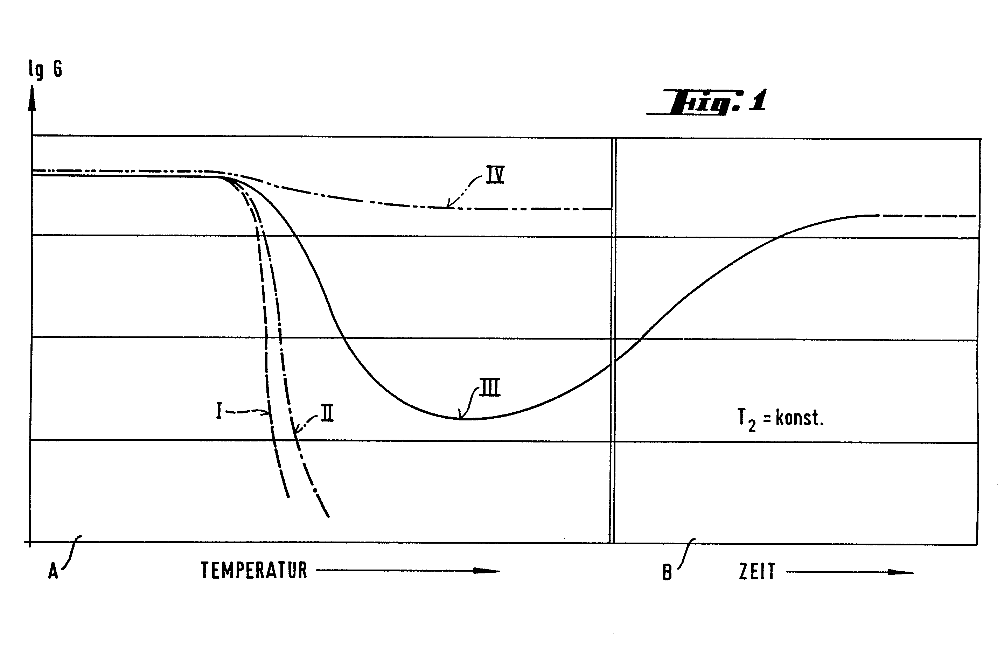

In Fig. 1 ist die Änderung des Schubmoduls G eines Thermoplasten mit einem hohen Anteil amorpher Phase schematisch dargestellt. Log G ist in Teil A der Figur gegen die Temperatur und in Teil B gegen die Zeit aufgetragen. Kurve I gibt die Änderung des Schubmoduls des unbestrahlten, Kurve II des bestrahlten Thermoplasten wieder. Nach Erhitzung des bestrahlten Thermoplasten auf eine Temperatur $T_1$ vorzugsweise oberhalb der Glasübergangstemperatur erhält man die in Kurve III wiedergegebene Änderung des Schubmoduls, der ein Minimum durchläuft. Erwärmt man weiter auf $T_2$ und hält diese Temperatur, steigt der Schubmodul und erreicht bei einigen Sorten nahezu den Raumtemperaturwert. Für die auf Raumtemperatur abgekühlten Materialien gibt die Kurve IV die Abhängigkeit des Schubmoduls von der Temperatur wieder (log $G = f(T)$).

## Beispiel 1

Ein handelsübliches Polysulfon mit einer Wärmeformbeständigkeit von 174 °C, Glasübergangstemperatur etwa 187 °C wurde in Form von Plättchen mit den Maßen 60 × 10 × 1,3 mm in normaler Luftatmosphäre mit Beta-Strahlen bestrahlt. Die Strahlspannung betrug 3 MV, die Dosisleistung 0,05 MJ/kg • min. Bei der Bestrahlung erwärmten sich die Plättchen, deren spezifische Schichtdicke etwa 1,2 g/cm$^2$ war, pro 0,1 MJ/kg um etwa 50 K. Die Plättchen wurden dann auf Raumtemperatur abgekühlt und die Bestrahlung bis zu einer Gesamtdosis von 1,6 MJ/kg fortgesetzt. Die Plättchen wurden in einer ersten Stufe auf 250 °C, Verweilzeit 6 h, und in einer zweiten Stufe auf 350 °C, Verweilzeit 12 h, erhitzt.

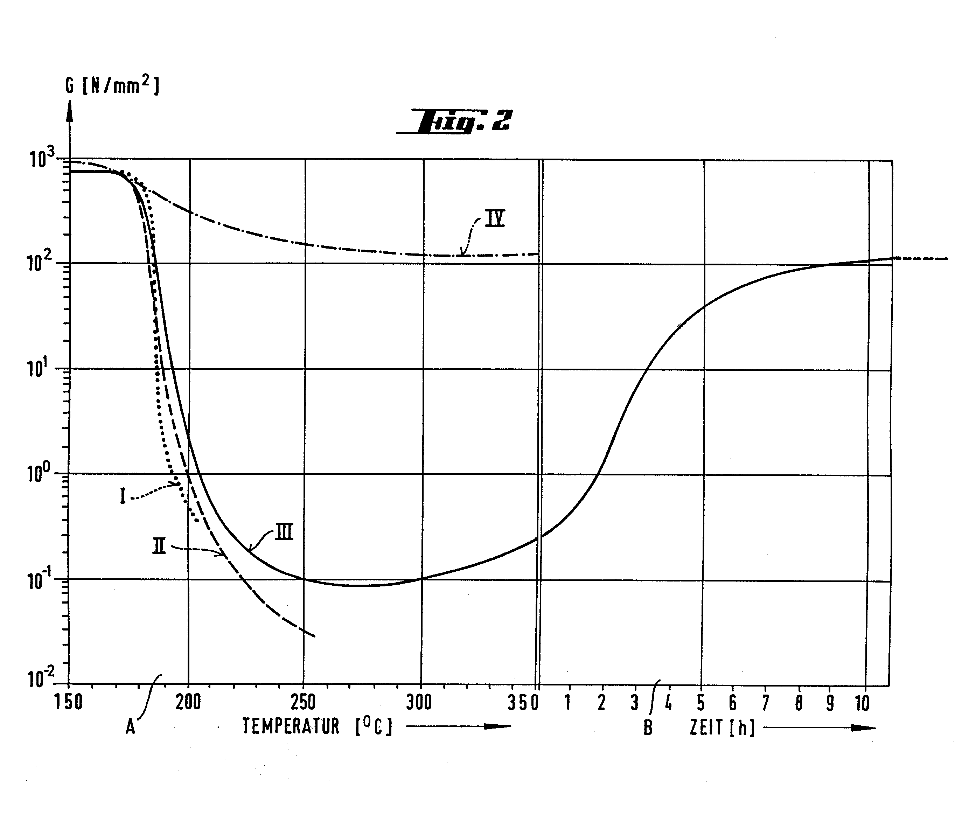

In Teil A von Fig. 2 ist die Änderung des Schubmoduls mit der Temperatur (log $G = f(T)$) aufgetragen. Kurve I gilt für das unbestrahlte, Kurve II für das bestrahlte Polysulfon. Kurve III gibt das Schubmodul nach Erhitzung der Probe auf die erste Erhitzungsstufe von 250 °C wieder. Nach einer Haltezeit von 6 h wurde die Temperatur auf 350 °C erhöht. Die Änderungen des Schubmoduls bei dieser Temperatur mit der Verweilzeit ist in Teil B der Figur dargestellt. Nach Abkühlung auf Raumtemperatur erhält man ein Material, dessen Schubmodul durch die Kurve IV wiedergegeben ist.

## Beispiel 2

Unter den im Beispiel 1 beschriebenen Bedingungen wurden etwa 1,8 mm dicke Platten aus einem mit Kohlenstoffasergewebe verstärkten Polysulfon bestrahlt, wobei die Bestrahlungsdosis 0,5, 1,0 und 2,0 MJ/kg betrug. Der Fasergehalt der laminatartig strukturierten Platten war etwa 60 Gew.%. Nach der Bestrahlung wurden die Platten in einer ersten Stufe auf 250 °C und in einer zweiten Stufe auf 400 °C erhitzt, Verweilzeiten wie in Beispiel 1.

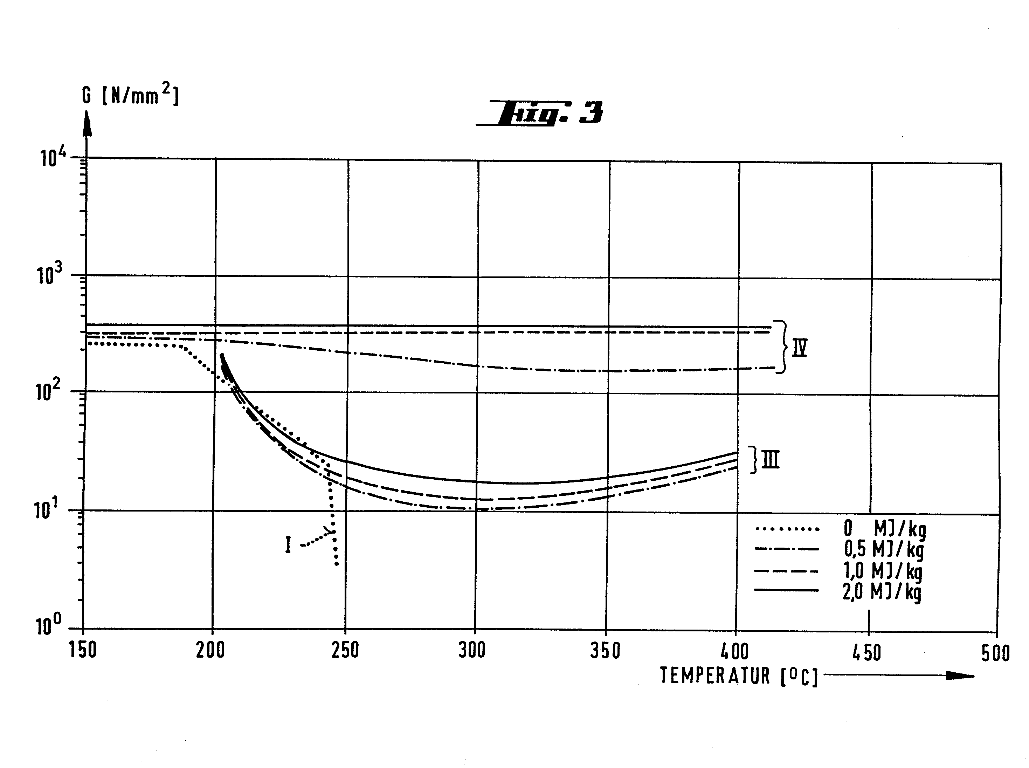

Die Ergebnisse sind in Fig. 3 dargestellt. Die Kurve I gibt die Aenderung des Schubmoduls unbestrahlter Platten wieder, die oberhalb etwa 240 °C delaminierten. Die Kurven III und IV stellen wie oben erläutert den Schubmodulverlauf (log $G = f(T)$) der Platten nach der ersten Erhitzungsstufe bzw. nach der zweiten Erhitzungsstufe dar.

## Beispiel 3

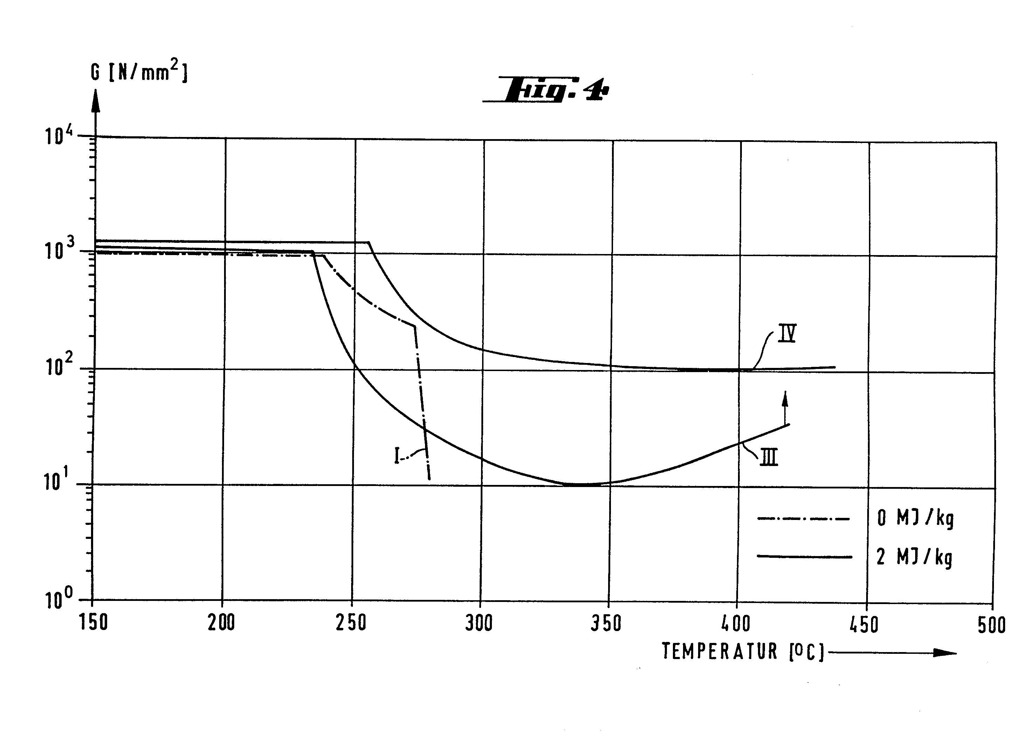

Polyethersulfon mit Kohlenstoffaserverstärkung, Fasergehalt ca. 60 Gew.%, unidirektional angeordnete Kurzschnittfasern, wurden unter den in Beispiel 1 beschriebenen Bedingungen mit einer Dosis von 2,0 MJ/kg bestrahlt. Die Temperaturbehandlungen erfolgten bei 250 °C, 18 h und 420 °C, 1 h. In Fig. 4 sind die Ergebnisse dargestellt. Die Dicke der unbestrahlten Probe (Kurve I) wächst bei 250 °C auf etwa 4 mm und delaminiert bei etwa 270 °C. Der Schubmodul ist aus diesen Gründen nicht vergleichbar mit den Kurven III und IV, die die Änderung des Schubmoduls mit der Temperatur nach der ersten bzw. nach der zweiten Erhitzungsstufe wiedergeben.

## Beispiel 4

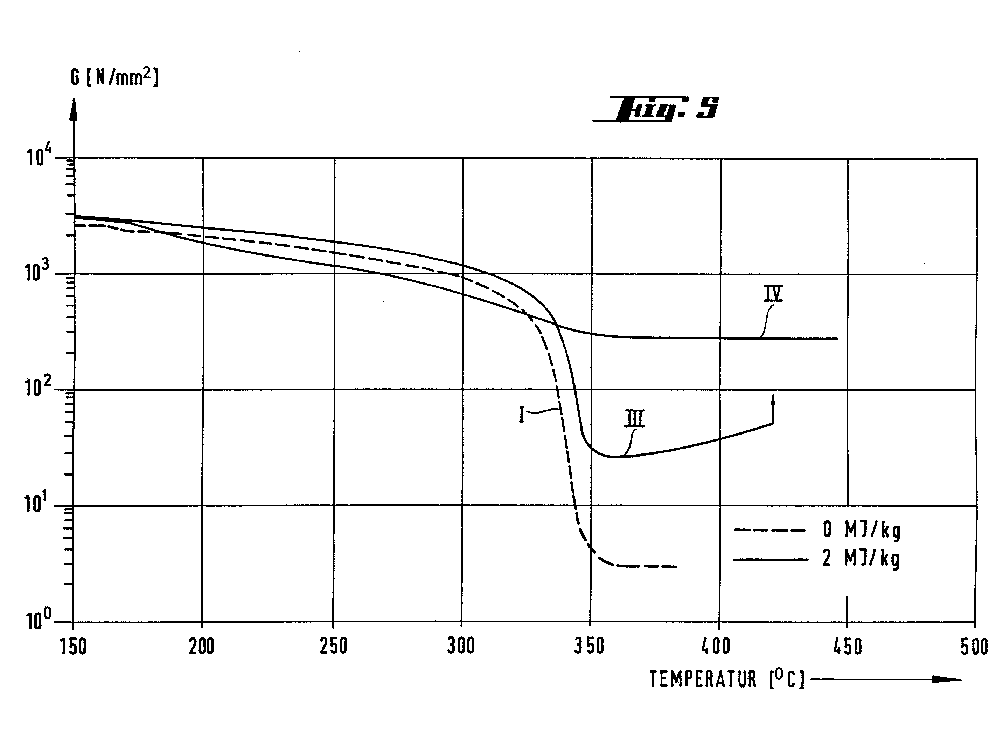

Ein kohlenstoffaserverstärktes Laminat mit einer Matrix aus Polyetheretherketon, Fasergehalt etwa 69 %, Dicke ca. 1,1 mm wurde wie in Beispiel 1 beschrieben mit einer Dosis von 2 MJ/kg bestrahlt und in einer ersten Stufe auf 300 °C erhitzt, Verweilzeit 8 h, und in einer zweiten Stufe auf 420 °C, Verweilzeit 3 h. In Fig. 5 ist der Verlauf des Schubmoduls (log $G = f(T)$) der unbestrahlten Probe (Kurve I) mit dem von Proben nach der ersten Temperaturbehandlung (Kurve III) und nach der zweiten Temperaturbehandlung (Kurve IV) verglichen.

Beispiel 5

Zur Bestimmung der Spannungsrißbeständigkeit von Polysulfon, das wie in Beispiel 2 beschrieben bestrahlt und einer thermischen Behandlung unterworfen war, wurden Proben mit den Maßen 30 × 10 × 1,3 mm in eine Prüfvorrichtung eingespannt, Randfaserspannung 50 bis 70 N/mm², und in Spannungsrisse auslösende Flüssigkeiten getaucht. Zum Vergleich wurden unbehandelte Proben geprüft.

a) unbehandelte_Polysulfon

Aceton  
Methylethylketon        sofortiger Bruch  
Toluol                  (innerhalb einer Minute)  
Morpholin

Isopropanol         Spannungsrisse nach etwa 10 min  
Salpetersäure  
n-Hexan         —  Spannungsrisse nach etwa 20 min

b) bestrahltes (0,5 MJ/kg) und thermisch  
behandeltes_Polysulfon

Aceton  
Isopropanol        keine Spannungsrisse  
n-Hexan

Methylethylketon — keine Spannungsrisse,  
Morpholin            leichte Anlösungen

Toluol            — Bruch nach 3 h  
Salpetersäure    — Bruch nach 18 h

c) bestrahltes (2 MJ/kg) und thermisch  
behandeltes_Polysulfon

keine Spannungsrisse  
keine Anlösungen

## Beispiel 6

Mit etwa 0,6 und 0,8 MJ/kg bestrahltes Polysulfon-Granulat wurde in Methylenchlorid gelöst und mit der Lösung Platten aus kohlenstoffaserverstärktem Kohlenstoff (CFC) imprägniert, deren offene Porosität ca. 20 bis 30 % betrug. Der Permeabilitätskoeffizient der imprägnierten Platten war im Mittel $1 \bullet 10^{-4}$ cm²/s gegen $2 \bullet 10^{-2}$ der Vergleichsprobe. Die imprägnierten Platten wurden auf 240 °C erhitzt, Verweilzeit 24 h, und dann auf 260 °C, Verweilzeit 12 h. Der mittlere Permeabilitätskoeffizient der getemperten Platten war ca. $2 \bullet 10^{-4}$ cm²/s.

Ein zweiter Satz CFC-Platten wurde zweimal mit der polysulfonhaltigen Lösung imprägniert und nach Verdampfen des Lösungsmittels der Wärmebehandlung unterworfen. Der Permeabilitätskoeffizient dieser Platten war nur $6 \bullet 10^{-7}$ cm²/s.

## Beispiel 7

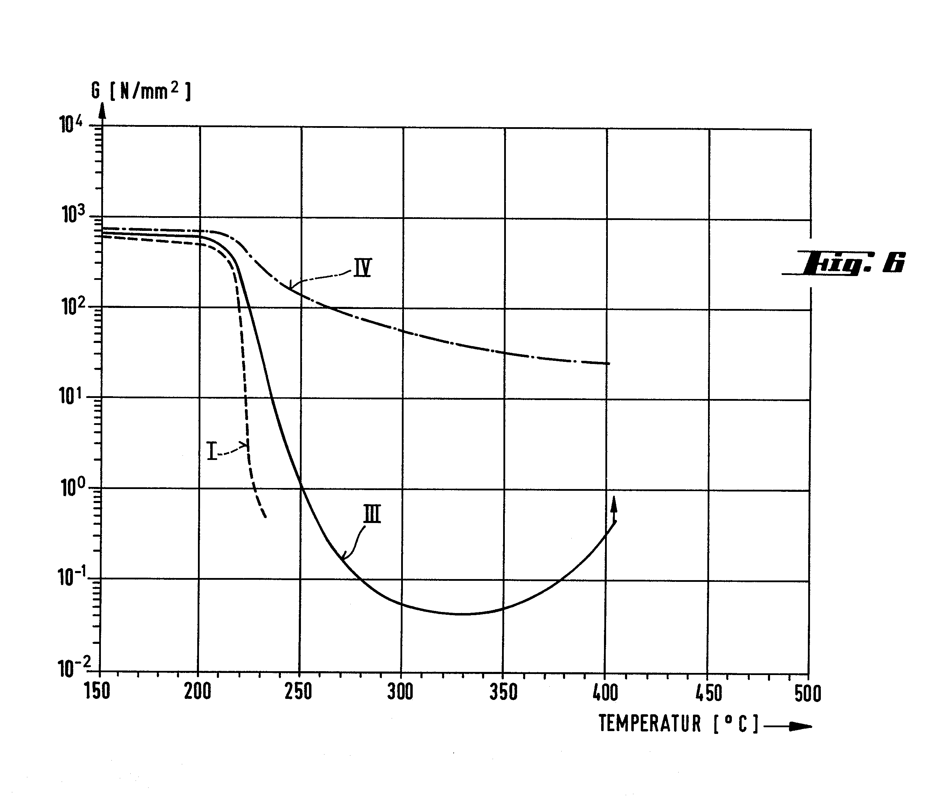

Ein handelsübliches Polyetherimid (Ultem® 1000) in Form von 3,3 mm dicken Platten wurde unter den in Beispiel 1 beschriebenen Bedingungen bestrahlt, wobei die Bestrahlungsdosis 2,0 MJ/kg betrug. Um die Torsionsschwingungsversuche durchführen zu können, wurden diese Plättchen in einer Presse bei 280°C während 30 min. auf die Dicke 1,2 mm verformt. Die Temperaturbehandlungen erfolgten bei 300°C, 20 h und 400°C, 1 h. In Figur 6 sind die Ergebnisse dargestellt. Dabei wird der Verlauf des Schubmoduls der unbestrahlten Probe (Kurve I) mit dem von Proben nach der ersten Temperaturbehandlung (Kurve III) und nach der zweiten Temperaturbehandlung (Kurve IV) verglichen. Das Polyetherimid zeigt also ein ähnliches Verhalten bei der thermischen Vernetzung wie Polysulfon.

## Beispiel 8

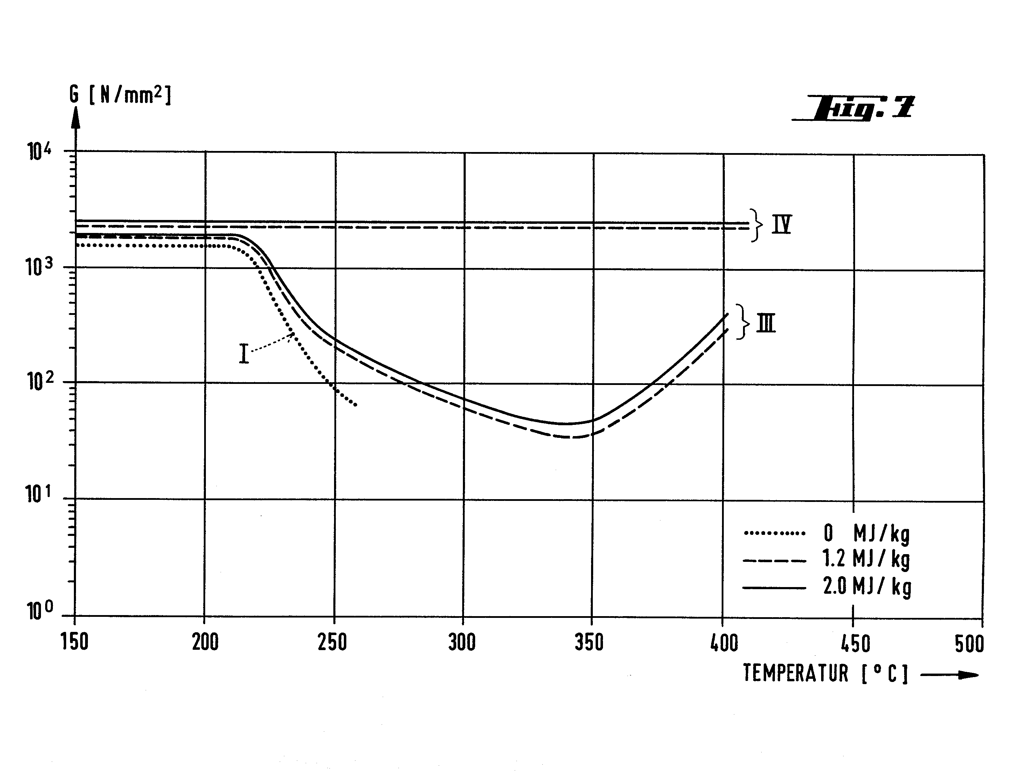

Ein Kohlenstoffaserverstärktes Laminat mit einer Matrix aus Polyetherimid (Ultem® 1000), unidirektionalen Kohlestoffasern, Faserngehalt 42 Vol-% wurde in Form von 1,6 mm dicken Platten unter den in Beispiel 1 angegebenen Bedingungen bestrahlt, wobei die Bestrahlungsdosis 1,2 bzw. 2,0 MJ/kg betrug. Um die Torsionsschwingungsversuche durchführen zu können, wurden diese Plättchen in einer Presse bei 280°C während 30 min. auf die Dicke 1,2 mm verformt. Die Temperaturbehandlungen erfolgten bei 280°C, 18 h und 400°C, 1,5 h. Die Ergebnisse sind in der Figur 7 dargestellt. Die Dicke der unbestrahlten Probe (Kurve 1) wächst bis 290°C auf 2,6 mm und delaminiert ab 240°C. Die Kurven III und IV stellen den Schubmodulverlauf der Platten nach der ersten bzw. nach der zweiten Erhitzungsstufe dar. Bei diesen Proben kann keine Dickeveränderung festgestellt werden.

## Beispiel 9: Herstellung eines Kohlefaser-Laminates

Ein Kohlefasergewebe wurde mit einer ca. 10%igen Lösung von Polysulfon (Ultrason®S 2000) in Methylenchlorid imprägniert, wobei der Vorgang von Imprägnieren und Trocknen 3 × durchgeführt wurde. Anschliessend wurde das Prepreg bei 350°C zu einer Platte von 2 mm Dicke (Fasergehalt ~ 65 Ge.%) gepresst. Pressdauer 1 h 350°C. Eigenschaften der Laminate:

| | ILS MPa | ILS* MPa | Δ G % |
|---|---|---|---|
| Ultrason®, unbehandelt | 56 | 12 | 7,7 |
| Ultrason®, 1 MJ/kg | 64 | 34 | 5,1 |
| Ultrason®, 1 MJ/kg, nachgehärtet 2 h 350°C | 56 | 47 | 2,1 |

*nach 24 h in MEK (25°C), ILS: Interlaminare Spaltfestigkeit

## Beispiel 10: Herstellung eines Epoxidharz-Formkörpers

20 g Polysulfon (Ultrason® 2000) wurden bei 140°C in einer Mischung von 50 g Tetraglycidyl-diaminodiphenylmethan und 50 g Triglycidyl-p-aminophenol gelöst und gut gerührt. Anschliessend wurden 36 g Diaminodiphenylsulfon gelöst, die Luft mittels Vakuumbehandlung evakuiert und in vorgenormte Formen (200 × 200 × 4 mm) aus Al-Legierung gegossen. Härtung 180°C, 2 h, und 210°C, 2 h und anschliessende Aushärtung bei 240°C, 6 h.

Es wurden folgende Eigenschaften gemessen:

|  | BF<br>MPa | BD<br>% |
| --- | --- | --- |
| Ultrason® unbehandelt | 98 | 2.6 |
| Ultrason® 0.8 MJ/kg | 138 | 4.0 |
| Ultrason® 1.4 MJ | 135 | 4.1 |

BF: Biegefestigkeit nach ISO 178; BD: Biegedehnung

Das strahlenbehandelte Polysulfon zeigt eine bessere Verträglichkeit im vernetzenden Epoxidharz und gibt höhere Festigkeit und Flexibilität.

**Patentansprüche**

1. Verfahren zum Herstellen eines temperatur- und spannungsrissbeständigen Kunststoffs, dadurch gekennzeichnet, dass aromatische Ringstrukturen enthaltende strahlungsbeständige Thermoplaste
    a) mit ionisierender Strahlung bestrahlt,
    b) zur teilweisen Vernetzung auf eine erste Temperatur und
    c) zur vollständigen Vernetzung auf eine zweite Temperatur, gleich oder oberhalb der ersten Temperatur erhitzt werden.

2. Verfahren nach Anspruch 1, dadurch gekennzeichnet, dass Thermoplaste aus der Gruppe lineare Polyaryloxide, -sulfide, -sulfone und -ether verwendet werden.

3. Verfahren nach Anspruch 1, dadurch gekennzeichnet, dass ein Thermoplast aus der Gruppe Polysulfon, Polyethersulfon, Polyetheretherketon, Polyetherimid verwendet wird.

4. Verfahren nach Anspruch 1, dadurch gekennzeichnet, dass der Thermoplast mit Beta-Strahlen bestrahlt wird.

5. Verfahren nach Anspruch 1, dadurch gekennzeichnet, dass der Thermoplast mit einer Dosis von 0,5 bis 2 MJ/kg beaufschlagt wird.

6. Verfahren nach Anspruch 1, dadurch gekennzeichnet, dass die Dosis stufenweise aufgebracht wird.

7. Verfahren nach Anspruch 1, dadurch gekennzeichnet, dass der Thermoplast bei einer Temperatur unterhalb der Glasübergangstemperatur bestrahlt wird.

8. Verfahren nach Anspruch 1, dadurch gekennzeichnet, dass der bestrahlte Thermoplast auf eine erste Temperatur oberhalb der Glasübergangstemperatur erhitzt wird.

9. Verfahren nach Anspruch 1, dadurch gekennzeichnet, dass der Thermoplast in Granulatform bestrahlt, das bestrahlte Granulat zu Formlingen verarbeitet und die Formlinge auf eine erste Temperatur oberhalb der Glasübergangs-Temperatur und auf eine zweite Temperatur oberhalb der Verwendungstemperatur wenigstens aber oberhalb der ersten Temperatur erhitzt werden.

10. Verfahren nach Anspruch 1, dadurch gekennzeichnet, dass der Thermoplast zu Formlingen verarbeitet wird, die Formlinge bestrahlt, auf eine erste Temperatur oberhalb der Glasübergangstemperatur und auf eine zweite Temperatur oberhalb der Verwendungsgemperatur, wenigstens aber oberhalb der ersten Temperatur erhitzt werden.

11. Verfahren nach Anspruch 1, dadurch gekennzeichnet, dass die erste Temperatur gleich der zweiten Temperatur ist.

12. Verfahren nach Anspruch 1, dadurch gekennzeichnet, dass ein mit Fasern verstärkter Thermoplast verwendet wird.

13. Verfahren nach Anspruch 1, dadurch gekennzeichnet, dass ein mit Kohlenstoffasern verstärkter Thermoplast verwendet wird.

14. Verfahren nach Anspruch 1, dadurch gekennzeichnet, dass ein geschäumter Thermoplast verwendet wird.

15. Verfahren nach Anspruch 1, dadurch gekennzeichnet, dass der Thermoplast in Granulatform bestrahlt und gelöst wird, mit der Lösung poröse Korper imprägniert und die Körper zum Verdampfen des Lösemittels und zur teilweisen Vernetzung des Thermoplasten auf eine erste Temperatur und anschliessend auf eine zweite Temperatur oberhalb ihrer Verwendungstemperatur, wenigstens aber oberhalb der ersten Temperatur erhitzt werden.

16. Verfahren nach Anspruch 1, dadurch gekennzeichnet, dass der in Granulatform bestrahlte, in einem Lösemittel gelöste Thermoplast als Kleber auf sich berührende Flächen eines Verbundkörpers aufgetragen, das Lösmittel verdampft und der Körper zur teilweisen Vernetzung des Thermoplasten auf eine erste Temperatur und anschliessend auf eine zweite Temperatur oberhalb seiner Verwendungstemperatur, wenigstens aber oberhalb der ersten Temperatur erhitzt wird.

17. Verfahren nach Anspruch 1, dadurch gekennzeichnet, dass der in Granulatform bestrahlte Thermoplast gelöst, die Lösung auf die Oberfläche eines zu schützenden Körpers aufgetragen und der Körper zum Verdampfen des Lösemittels und zur teilweisen Vernetzung auf eine erste Temperatur und anschliessend auf eine zweite Temperatur oberhalb der Verwendungstemperatur, wenigstens aber oberhalb der ersten Temperatur erhitzt wird.

18. Duromere, welche mit Hilfe der nach Anspruch 1 hergestellten Thermoplaste modifiziert sind.

19. Epoxidharz gemäss Anspruch 18.

20. Thermoplast, erhältlich nach dem Verfahren gemäss Anspruch 1.

9

Fig. 1

Fig. 2

023844₇

Fig. 3

0238447

G [N/mm²]

TEMPERATUR [°C]

0 MJ/kg
0,5 MJ/kg
1,0 MJ/kg
2,0 MJ/kg

Fig. 4

Fig. 5

Fig. 6

Fig. 7

G [N/mm²]

10⁴

10³

10²

10¹

10⁰

150    200    250    300    350    400    450    500

TEMPERATUR [°C]

I

II

IV

III

............  0   MJ/kg
‒ ‒ ‒ ‒   1.2 MJ/kg
————    2.0 MJ/kg

0238447